# EUROPÄISCHE PATENTANMELDUNG

(11) **EP 4 726 389 A1**
(43) Veröffentlichungstag der Anmeldung: **15.04.2026**
(21) Anmeldenummer: 24206237.0
(22) Anmeldetag: 11.10.2024
(51) Int. Cl.: G01N 31/16, B01L 3/02, G01N 35/10, G01N 21/78, G01N 21/79, G01N 31/02, G01N 31/18, G01N 31/22

(54) **MESSVORRICHTUNG UND VERFAHREN ZUR QUANTITATIVEN CHEMISCHEN ANALYSE**

(71) Anmelder: Safechem Europe GmbH, 40474 Düsseldorf (DE)
(72) Erfinder: Hill, Sebastian, 41812 Erkelenz (DE); Lukowski, Dieter, 47608 Geldern (DE)
(74) Vertreter: Christ, Niko

(57) **Zusammenfassung**

Die Erfindung betrifft eine Messvorrichtung zur quantitativen chemischen Analyse, die eine Fördereinheit verwendet. Diese Fördereinheit ist über ein Mehrfachventil mit einem Probenbehälter, einem Messbehälter und wenigstens einem Reagenzbehälter verbunden. Ein Reagenz wird durch die Fördereinheit vom Reagenzbehälter in den Messbehälter befördert, der eine Probe enthält. Ein Sensor der einen Umschlagspunkt detektiert, ist am Messbehälter angebracht. Die Vorrichtung kann zusätzlich mit einem Abfallbehälter verbunden werden. Ein Verfahren zur Nutzung dieser Vorrichtung umfasst das Aufziehen der Probe, die Zugabe in den Messbehälter und die Messung des Umschlagspunktes.

## Beschreibung

Die vorliegende Erfindung betrifft eine Messvorrichtung zur quantitativen chemischen Analyse, umfassend eine Fördereinheit, welche mit wenigstens einem Probenbehälter zur Aufnahme einer Probe, wenigstens einem Reagenzbehälter mit einem Reagenz, und einem Messbehälter stofflich verbunden ist, wobei dem Messbehälter wenigstens ein Sensor zur Detektion eines Umschlagspunktes einer chemischen Reaktion zwischen der Probe und dem Reagenz zugeordnet ist, welcher mit einer Auswerteeinheit zur Auswertung der Messsignale des wenigstens einen Sensors datenverbunden ist, sowie ein entsprechendes Verfahren.

Eine solche Vorrichtung und ein solches Verfahren sind bereits aus der Druckschrift EP 3 901 621 B1 vorbekannt. Dort wird vorgeschlagen, eine Messkammer über eine Vielzahl von Versorgungsleitungen zu beschicken, so dass eine Messung der Probe automatisiert und möglichst einfach ablaufen kann. Sowohl eine Probe als auch Reagenzien und Indikatoren können über entsprechende Zuleitungen in die Messkammer eingebracht und dort mithilfe einer Rührvorrichtung durchmischt werden. Mithilfe eines Sensors kann die Probe optisch überwacht werden und optisch feststellbare Veränderungen sind über den Sensor erfassbar. Auf diese Weise können Messungen selbsttätig durchgeführt und wiederholt werden.

Konkret handelt es sich dort um eine Probe eines lösemittelbasierten Reinigungsbades, deren Zustand und Eignung zur weiteren Verwendung geprüft und sichergestellt werden soll. Proben werden in regelmäßigen Abständen automatisiert entnommen, geprüft und nach positiver Prüfung in einen Abfallbehälter ausgespült. Solange die Reinigungslösung die Anforderungen erfüllt, kann sie weiter verwendet werden. Ergibt sich aufgrund der Prüfung, dass der Zustand der Reinigungslösung vom gewünschten Zustand abweicht, wird dem Bediener eine Handlungsempfehlung (Korrekturmaßnahme) basierend auf dem Messergebnis angezeigt.

Auf dem Gebiet der quantitativen chemischen Analyse, insbesondere von Lösungsmitteln ist es üblich, verschiedene Methoden und Vorrichtungen zu verwenden, um die Konzentration von Substanzen in einer Probe zu bestimmen. Bekannte Systeme umfassen typischerweise titrimetrische Verfahren, bei denen eine Reagenzlösung mit bekannter Konzentration zu einer Probe gegeben wird, bis eine chemische Reaktion einen messbaren Endpunkt erreicht. Diese Endpunkte können durch verschiedene Indikatoren wie Farbänderungen oder Leitfähigkeitsänderungen detektiert werden. Solche Systeme setzen oft manuelle Methoden ein, was zu einer erhöhten Fehleranfälligkeit und einem höheren Zeitaufwand führen kann.

Bei der Titration von nicht mischbaren Flüssigkeiten kann bei der Durchmischung eine Emulsion entstehen. Hierbei können Farbveränderungen, die den Umschlagspunkt der Titration kennzeichnen nicht ohne Phasentrennung erkannt werden. Eine Phasentrennung ist jedoch sehr zeitaufwendig.

Gemäß bekannter, oben angesprochener Technik in der Lösungsmittelüberwachung werden automatisierte Systeme zur chemischen Analyse eingesetzt, um die Genauigkeit und Effizienz zu verbessern. Diese Systeme verwenden häufig Pumpen und Ventile, um Flüssigkeiten zu bewegen und zu dosieren. Trotz der Automatisierung bestehen jedoch weiterhin Herausforderungen, insbesondere in Bezug auf die Präzision der Dosierung und die Zuverlässigkeit der Detektion von Umschlagspunkten, jedoch sollen solche Systeme auch möglichst einfach und kostengünstig operieren können.

Automatisierte Titrationssysteme arbeiten häufig mit Sensoren, welche direkt im Messbehälter angeordnet sind. Hierbei haben die Sensoren jedoch Kontakt mit der Probe, was die Sensoren wartungsanfälliger macht.

Es sind zudem in der Lösungsmittelüberwachung keine Messvorrichtungen vorbekannt, die in eine Reinigungsanlage integriert werden können, sodass der Messprozess inkl. Probenentnahme aus der Anlage vollständig autonom abläuft.

Es ist daher ein der vorliegenden Erfindung zugrunde liegendes technisches Problem, eine Vorrichtung und ein Verfahren zur quantitativen chemischen Analyse bereitzustellen, bei dem der Umschlagspunkt einer chemischen Reaktion berührungslos gemessen werden kann. Zudem sollen auch Emulsionen direkt ohne vorherige Phasentrennung analysiert werden können.

Gemäß der vorliegenden Offenbarung werden diese Aufgaben durch die Merkmale des unabhängigen Vorrichtungsanspruchs 1 und des nebengeordneten Verfahrensanspruchs 16 gelöst. Darüber hinaus ergeben sich weitere vorteilhafte Ausführungsformen sowohl der Vorrichtung als auch des Verfahrens aus den sich jeweils anschließenden abhängigen Ansprüchen.

Es ist eine Messvorrichtung zur quantitativen chemischen Analyse vorgesehen, umfassend eine Fördereinheit, welche mit wenigstens einem Probenbehälter zur Aufnahme einer Probe, wenigstens einem Reagenzbehälter mit einem Reagenz, und einem Messbehälter stofflich verbunden ist, wobei dem Messbehälter wenigstens ein Sensor zur Detektion eines Umschlagspunktes einer chemischen Reaktion zwischen der Probe und dem Reagenz zugeordnet ist, welcher mit einer Auswerteeinheit zur Auswertung der Messsignale des wenigstens einen Sensors datenverbunden ist, erfindungsgemäß ist die Messvorrichtung dadurch gekennzeichnet, dass der Fördereinheit ein Zwischenspeicher zugeordnet ist, und sie über ein Mehrfachventil mit dem Probenbehälter, dem Messbehälter und dem wenigstens einen Reagenzbehälter abwechselnd verbindbar ist.

Die Messvorrichtung zur quantitativen chemischen Analyse umfasst eine Fördereinheit, welche mit einem Probenbehälter, einem Messbehälter und einem Reagenzbehälter stofflich, beispielsweise über Schlauchleitungen, verbunden ist. Diese Verbindung ermöglicht den Transport von Proben und wenigstens einem Reagenz zwischen den beteiligen zumindest drei Behältern und stellt sicher, dass die chemische Analyse effizient in dem Messbehälter durchgeführt werden kann. Der Fördereinheit ist ein Zwischenspeicher zugeordnet, sodass Proben oder Reagenzien zwischengespeichert werden können. Das Mehrfachventil ermöglicht die flexible Steuerung des Flusses der Probe zwischen den Behältern, indem es verschiedene Flusswege öffnet oder schließt, je nach Bedarf der Analyse. Eine Probe und ein Reagenz können durch die Fördereinheit vom Probenbehälter bzw. vom Reagenzbehälter in den Messbehälter befördert werden, indem zunächst das Mehrfachventil so verstellt wird, dass eine Verbindung mit einem der betroffenen Behälter hergestellt wird. Die Probe oder das Reagenz kann zunächst in den Zwischenspeicher gezogen werden. Dann wird der Inhalt des Zwischenspeichers in den Messbehälter abgegeben. Nach erfolgreicher Zugabe des Reagenzes und der Probe kann der Umschlagspunkt mithilfe eines wenigstens einen Sensors gemessen werden. Dieser Sensor ist mit einer Auswerteeinheit datenverbunden, die die Messsignale des Sensors auswertet. Diese Anordnung ermöglicht die präzise, berührungslose Erfassung des Umschlagspunktes während der chemischen Analyse. Über den Senor ist es zudem möglich den Gehalt an Schwefelwasserstoff (H₂S) sowohl aus wässriger Lösung, als auch in der Gasphase zu bestimmen.

Zusätzlich kann der Messvorrichtung ein Belüftungselement zugeordnet sein, sodass ein ausreichender Luftaustausch im Sinne des Explosionsschutzes gewährleistet ist. Auch kann die Messvorrichtung direkt in eine Reinigungsanlage integriert sein, da so ein vollautomatisierter Messvorgang möglich ist. Hierfür kann der Reinigungsanlage direkt eine Probe entnommen werden, welche mithilfe der erfindungsgemäßen Messvorrichtung analysiert werden kann.

In konkreter Ausführung kann die Fördereinheit zusätzlich mit wenigstens einem Abfallbehälter über das Mehrfachventil verbindbar sein. Durch die zusätzliche Verbindung der Fördereinheit mit einem Abfallbehälter über das Mehrfachventil wird die Entsorgung von überschüssigen oder verbrauchten Flüssigkeiten erleichtert. Dies trägt zur Sauberkeit und Effizienz des gesamten Analyseprozesses bei, da die Fördereinheit nicht nur für die präzise Dosierung und Übertragung der Proben und Reagenzien verantwortlich ist, sondern auch für die sichere und kontrollierte Entsorgung von Abfallflüssigkeiten. Die Fähigkeit, die Fördereinheit abwechselnd mit dem Probenbehälter, dem Messbehälter, dem Reagenzbehälter und dem Abfallbehälter zu verbinden, erlaubt es, die Komponenten zunächst zusammenzustellen und schließlich den Inhalt aus dem Messbehälter abzusaugen und in den Abfallbehälter zu verbringen. Auch das Ansaugen und Ausbringen einer Spülflüssigkeit zur Reinigung des Messbehälters kann insoweit vorgesehen sein.

Bevorzugtermaßen kann der wenigstens eine Sensor ein Farbsensor, vorzugsweise ein RGB Sensor sein. Der Farbsensor ist in der Lage, Farbänderungen zu detektieren, die während der chemischen Reaktion zwischen der Probe und dem Reagenz auftreten. Diese Farbänderungen sind oft Indikatoren für den Umschlagspunkt der Reaktion, der für die quantitative Analyse entscheidend ist. Der Farbsensor ermöglicht eine präzise Erfassung dieser Änderungen und liefert somit genaue Messdaten, die von der Auswerteeinheit verarbeitet werden können. Ein bevorzugter Typ des Farbsensors ist der RGB-Sensor, der die Fähigkeit besitzt, die Intensitäten der Grundfarben Rot, Grün und Blau zu messen. Darüber hinaus ermöglicht die datenverbundene Kommunikation zwischen dem Farbsensor und der Auswerteeinheit eine Echtzeit-Überwachung und -Analyse der chemischen Reaktionen, was die Effizienz des Analyseprozesses steigert. Für die Auswertung der Bilddaten können die RGB-Farben in den HSV-Farbraum transferiert werden, sodass eine präzise Erkennung des Umschlagspunktes möglich ist.

Alternativ oder ergänzend kann vorgesehen sein, dass der wenigstens eine Sensor ein Leitfähigkeitssensor ist. Ein Leitfähigkeitssensor misst die elektrische Leitfähigkeit einer Lösung, die stark von der Konzentration der ionischen Spezies in der Lösung abhängt. In der beschriebenen Vorrichtung ermöglicht der Leitfähigkeitssensor eine präzise und schnelle Detektion des Umschlagspunktes der chemischen Reaktion zwischen der Probe und dem Reagenz. Dies ist besonders vorteilhaft, da der Umschlagspunkt häufig mit einer signifikanten Änderung der Leitfähigkeit der Lösung einhergeht, was eine genaue und reproduzierbare Messung ermöglicht.

Die Integration eines, gegebenenfalls zusätzlichen, Leitfähigkeitssensors in die Messvorrichtung verbessert die Empfindlichkeit und Genauigkeit der Detektion im Vergleich zu anderen Sensortypen, wie etwa optischen Sensoren, die möglicherweise weniger empfindlich auf kleine Änderungen in der chemischen Zusammensetzung reagieren. Darüber hinaus kann ein Leitfähigkeitssensor in einem breiten Spektrum von chemischen Reaktionen eingesetzt werden, was die Vielseitigkeit der Messvorrichtung erhöht. Die Daten, die vom Leitfähigkeitssensor erfasst werden, werden ebenfalls an die Auswerteeinheit weitergeleitet, die für die Verarbeitung und Analyse der Messsignale und die Weitergabe und bedarfsweise weitere Verarbeitung der Messergebnisse verantwortlich ist. Diese datenverbundene Kommunikation zwischen dem Sensor und der Auswerteeinheit gewährleistet eine schnelle und effiziente Datenverarbeitung, was zu einer zeitnahen und genauen Bestimmung des Umschlagspunktes führt.

In sinnvoller Ausgestaltung kann es weiter vorgesehen sein, dass es sich bei dem Messbehälter um eine Messküvette handelt. Eine Messküvette ist ein speziell entwickeltes Gefäß, das in der Regel aus optisch transparentem Material wie Quarz oder Glas besteht und für die Durchführung von optischen Messungen, insbesondere in der Spektroskopie, optimiert ist. Durch die Verwendung einer Messküvette wird die Genauigkeit der Messungen erhöht, da die optischen Eigenschaften der Küvette eine störungsfreie Detektion der chemischen Reaktionen ermöglichen. Dies ist besonders wichtig, wenn der Sensor zur Detektion eines Umschlagspunktes einer chemischen Reaktion zwischen der Probe und dem Reagenz eingesetzt wird, da die optische Klarheit und die gleichmäßige Dicke der Küvette sicherstellen, dass die Lichtdurchlässigkeit und die Absorptionseigenschaften konsistent und reproduzierbar sind. Darüber hinaus ermöglicht die standardisierte Form und Größe der Messküvette eine einfache Handhabung und Integration in automatisierte Fördereinheiten wie die Spritzenpumpe, die über ein Mehrfachventil mit dem Probenbehälter, dem Messbehälter und dem Reagenzbehälter abwechselnd verbindbar ist. Die Verwendung einer Messküvette erleichtert auch die Reinigung und Wiederverwendbarkeit der Messvorrichtung, was deren Effizienz und Kosteneffektivität erhöht. Zudem kann die Messküvette so gestaltet sein, dass sie spezifische Volumina für die chemischen Reaktionen bereitstellt, was die Präzision der quantitativen Analyse weiter verbessert. Die Integration der Messküvette in die Messvorrichtung stellt sicher, dass die chemischen Reaktionen unter kontrollierten Bedingungen stattfinden, wodurch die Zuverlässigkeit und Reproduzierbarkeit der Messergebnisse gesteigert werden.

Eine Zahnradpumpe ist eine Art von Verdrängerpumpe, die Flüssigkeiten durch das Ineinandergreifen von Zahnrädern fördert. Eine Membranpumpe, auch als Diaphragmapumpe bekannt, fördert Flüssigkeiten oder Gase durch die Bewegung einer flexiblen Membran. Die Membran trennt den Pumpenraum in zwei Kammern: eine, die das zu fördernde Medium enthält, und eine, die durch die Bewegung der Membran angetrieben wird. Eine Schlauchpumpe hingegen ist eine Art Peristaltikpumpe, die Flüssigkeiten durch die Kompression und Entspannung eines flexiblen Schlauchs fördert. Diese Pumpenformen eignen sich besonders für Anwendungen, bei denen eine schonende Förderung und eine hohe chemische Beständigkeit erforderlich sind. Zudem sind die genannten Pumpenarten insofern vorteilhaft, da durch sie eine präzise Zugabe des Reagenzes und der Probe realisiert werden kann.

In konkreter Ausführung kann es sich bei der Fördereinheit um eine Spritzenpumpe handeln. Eine Spritzenpumpe, auch als Infusionspumpe oder Dosierpumpe bekannt, ist ein präzises Gerät, das zur kontrollierten Abgabe von Flüssigkeiten, wie Medikamenten oder Nährlösungen beispielsweise in der Medizin verwendet wird. Die Spritzenpumpe umfasst einen Zwischenspeicher, der als Spritze ausgestaltet ist und der mit dem Reagenz oder der Probe gefüllt sein kann. Ein motorisierter Mechanismus bewegt den Kolben der Spritze präzise nach vorne, um die Flüssigkeit in den Messbehälter abzugeben.

Eine solche Spritzenpumpe eignet sich besonders für die Anwendung in der erfindungsgemäßen Messvorrichtung da durch sie eine sehr genaue Zugabe des Reagenzes bzw. der Probe realisiert werden kann.

Gemäß einer weiteren Ausführungsform kann die Vorrichtung vorsehen, dass die Spritzenpumpe einen Kolben aufweist, der trieblich mit einem Motor gekoppelt ist, wobei der Motor vorzugsweise ein Schrittmotor oder ein Linearmotor ist. Dies ermöglicht eine präzise Steuerung der Flüssigkeitsbewegung innerhalb der Vorrichtung. Der Kolben, der trieblich mit einem Motor gekoppelt ist, kann durch die Motorsteuerung genau positioniert und bewegt werden, was eine genaue Dosierung und Förderung der Proben und Reagenzien gewährleistet. Ein Schrittmotor ermöglicht eine inkrementelle Bewegung des Kolbens, was eine sehr feine Abstufung der Flüssigkeitsdosierung und eine hohe Wiederholgenauigkeit sicherstellt. Dies ist besonders wichtig für die vorliegende quantitative chemische Analyse, bei der die Genauigkeit der Proben- und Reagenzdosierung entscheidend für die Zuverlässigkeit und Reproduzierbarkeit der Messergebnisse ist. Ein Linearmotor bietet ähnliche Vorteile, indem er eine gleichmäßige und kontrollierte Bewegung des Kolbens ermöglicht, was zu einer stabilen und präzisen Förderung der Flüssigkeiten führt. Die Kombination dieser Merkmale verbessert die Gesamtleistung der Messvorrichtung erheblich. Darüber hinaus ermöglicht die trieblich gekoppelte Motorsteuerung eine automatisierte und programmierbare Steuerung der Spritzenpumpe, was die Bedienung der Messvorrichtung vereinfacht, so dass Bedienpersonal nur in einer gewissen Regelmäßigkeit die Vorrichtung überwachen, aber nicht fortwährend bedienen muss. Die Möglichkeit, den Motor elektronisch zu steuern, eröffnet auch die Integration in komplexe Steuerungssysteme und die Fernüberwachung und Fernsteuerung der Messvorrichtung.

Die Spritzenpumpe kann über einen Schlauch mit dem Mehrfachventil verbunden sein und einen Kolben aufweisen, dessen Volumen geringer ist als das Volumen des Schlauchs, wobei der Schlauch als Zwischenspeicher dient und der Kolben trieblich mit einem Motor, vorzugsweise einem Schrittmotor oder einem Linearmotor gekoppelt ist. Eine derartige Ausführungsform ist insofern vorteilhaft, da die Probe bzw. Reagenz zunächst in einen Schlauch gezogen werden kann, so dass die Spritze geschont wird.

Darüber hinaus kann vorgesehen sein, dass der Messbehälter und/oder der Probenbehälter und/oder der wenigstens eine Reagenzbehälter über Schlauchleitungen mit dem Mehrfachventil der Fördereinheit verbunden sind. Schlauchleitungen ermöglichen eine flexible und modulare Verbindung zwischen den verschiedenen Behältern und der Fördereinheit, was die Anpassungsfähigkeit der Vorrichtung an unterschiedliche Proben- und Reagenzvolumina sowie an verschiedene chemische Reaktionen erhöht. Dies ist besonders vorteilhaft in Laborumgebungen, in denen häufig verschiedene Analysen durchgeführt werden müssen, da die Schlauchleitungen leicht ausgetauscht oder neu konfiguriert werden können, ohne dass die gesamte Vorrichtung demontiert werden muss. Zweitens tragen die Schlauchleitungen dazu bei, das Risiko von Kreuzkontaminationen zwischen verschiedenen Proben und Reagenzien zu minimieren. Da die Schlauchleitungen in der Regel aus inertem Material bestehen, das chemisch resistent ist, wird die Reinheit der Proben und Reagenzien gewährleistet. Drittens erleichtern die Schlauchleitungen die Reinigung und Wartung der Messvorrichtung. Sie können leicht entfernt, gereinigt und entweder ersetzt oder wieder angebracht werden, was die Betriebszeit der Vorrichtung maximiert und die Notwendigkeit für häufige Wartungsarbeiten reduziert.

Ferner kann vorgesehen sein, dass das Mehrfachventil einen Stator mit verschiedenen Ausgängen und einen Rotor mit wenigstens einer drehbaren Leitung umfasst. Der Stator dient als feststehender Teil des Ventils und besitzt mehrere Ausgänge, die jeweils mit unterschiedlichen Komponenten der Messvorrichtung, wie dem Probenbehälter, dem Messbehälter und dem Reagenzbehälter, verbunden sind. Der Rotor hingegen ist innerhalb des Stators drehbeweglich gelagert und enthält mindestens eine Leitung, die durch Drehung des Rotors verschiedene Verbindungen zwischen der Fördereinheit und den Ausgängen des Stators herstellen kann. Durch die Drehstellung des Rotors wird ein spezifischer Pfad von der Fördereinheit zu einem der Ausgänge des Mehrfachventils gebildet, wodurch die Fördereinheit selektiv mit dem Probenbehälter, dem Messbehälter oder dem wenigstens einen Reagenzbehälter, sowie falls vorhanden dem Abfallbehälter oder einem Spülmittelbehälter und dergleichen mehr verbunden werden kann.

In sinnvoller Ausgestaltung kann der Probenbehälter mit der Fördereinheit über eine Messkammer stofflich verbunden sein, wobei der Messkammer ein Bildgeber, insbesondere eine RGB-Kamera und /oder ein Nahinfrarotsensor zur optischen Prüfung der Probe zugeordnet ist. Die Zuordnung einer RGB-Kamera und oder eines Nahinfrarotsensors zur Messkammer bringt den Vorteil, dass die Probe nicht nur chemisch, sondern auch visuell überwacht werden kann. Dies ermöglicht die Erfassung von visuellen Veränderungen oder Anomalien in der Probe, die auf chemische Reaktionen hinweisen könnten, die durch die Sensoren allein möglicherweise nicht detektiert werden. Die Kamera kann hochauflösende Bilder oder Videos der Probe aufnehmen, die dann von der Auswerteeinheit analysiert werden können, um zusätzliche Datenpunkte zu liefern, welche die chemische Analyse ergänzen. Diese visuelle Überwachung kann insbesondere bei komplexen chemischen Reaktionen von Vorteil sein, bei denen Farbänderungen, Trübungen oder andere visuelle Indikatoren auftreten können, die auf den Fortschritt oder das Ergebnis der Reaktion hinweisen. Im eingangs angesprochenen Beispiel kann eine Reinigungsflüssigkeit bereits in einem ersten Schritt aussortiert werden, wenn eine so starke Trübung eingetreten ist, dass eine Messung sich erübrigt.

Durch die Integration der RGB-Kamera in die Messkammer wird die Messvorrichtung vielseitiger und leistungsfähiger, da sie nun in der Lage ist, sowohl quantitative chemische Daten als auch qualitative visuelle Informationen zu erfassen. Dies kann die Zuverlässigkeit und Genauigkeit der Analyseergebnisse erheblich verbessern und die Möglichkeit bieten, eine breitere Palette von chemischen Reaktionen zu überwachen und zu analysieren. Darüber hinaus kann die Kamera in Echtzeit arbeiten, was eine sofortige Rückmeldung über den Zustand der Probe und den Fortschritt der chemischen Reaktion ermöglicht. Dies ist besonders nützlich in Anwendungen, bei denen zeitkritische Entscheidungen getroffen werden müssen oder bei denen die Reaktion kontinuierlich überwacht werden muss. Ein Nahinfrarotsensor (NIR-Sensor) ist ein optisches Gerät, das Licht im nahen Infrarotbereich des elektromagnetischen Spektrums detektiert. Der Nahinfrarotbereich liegt typischerweise zwischen 700 nm und 2500 nm Wellenlänge. Er kann zur Messung der Trübheit der Probe verwendet werden.

Eine weitere Ausführungsform kann vorsehen, dass der Probenbehälter über einen Filter stofflich mit der Fördereinheit verbunden ist. Der Filter dient in erster Linie dazu, Verunreinigungen und Partikel aus der Probe zu entfernen, bevor diese in die Fördereinheit gelangen. Dies ist besonders wichtig, um die Genauigkeit und Zuverlässigkeit der chemischen Analyse zu gewährleisten, da Verunreinigungen die chemische Reaktion zwischen der Probe und dem Reagenz beeinträchtigen könnten. Durch die Integration des Filters wird sichergestellt, dass nur gereinigte Proben in den Messbehälter gelangen, was die Einsatzfähigkeit der Messvorrichtung sicherstellt, denn der Filter schützt die Fördereinheit vor möglichen Schäden durch Partikel oder Ablagerungen, welche die Mechanik der Pumpe beeinträchtigen könnten. Dies verlängert die Lebensdauer der Fördereinheit und reduziert den Wartungsaufwand. Der Filter kann auch als eine Art Barriere fungieren, die verhindert, dass Rückstände aus der Fördereinheit in den Probenbehälter zurückfließen, was eine Kreuzkontamination zwischen verschiedenen Proben verhindert. Dies ist besonders wichtig in Laborumgebungen, in denen mehrere Proben nacheinander analysiert werden. Die Integration des Filters in die Verbindung zwischen dem Probenbehälter und der Fördereinheit stellt somit eine wesentliche Verbesserung der Messvorrichtung dar, indem sie die Reinheit der Proben sicherstellt, die Lebensdauer der Pumpe verlängert und die Genauigkeit und Zuverlässigkeit der chemischen Analyse erhöht.

Bevorzugtermaßen kann das Reagenz entweder eine Säure oder eine Base oder Silbernitrat oder Quecksilber umfassen. Zunächst ermöglicht die Verwendung von Säuren und Basen eine breite Palette von chemischen Reaktionen, die für verschiedene analytische Verfahren erforderlich sind. Säuren und Basen sind grundlegende Reagenzien in der chemischen Analyse und können zur Titration verwendet werden, die zur Bestimmung der Konzentration oder der Anwesenheit bestimmter Ionen oder Moleküle in der Probe erforderlich sind. Die Integration von Silbernitrat als Reagenz erweitert die Anwendungsmöglichkeiten der Messvorrichtung erheblich. Silbernitrat ist ein spezifisches Reagenz, das häufig in der quantitativen Analyse zur Bestimmung von Halogenidionen wie Chlorid, Bromid und lodid verwendet wird. Durch die Zugabe von Silbernitrat zu einer Probe, die Halogenidionen enthält, bildet sich ein unlösliches Silberhalogenid, das durch den Sensor im Messbehälter detektiert werden kann. Diese Detektion ermöglicht eine präzise quantitative Analyse der Halogenidionen in der Probe.

Gemäß einer weiteren Ausführungsform kann das Reagenz und/oder die Probe einen Indikator umfassen, vorzugsweise einen Universalindikator oder Kaliumchromat. Der Indikator dient als chemischer Marker, der eine sichtbare oder messbare Veränderung zeigt, wenn der Umschlagspunkt der chemischen Reaktion erreicht wird. Diese Veränderung kann durch den Sensor detektiert und an die Auswerteeinheit weitergeleitet werden. Der Universalindikator bietet den Vorteil, dass er in der Lage ist, eine breite Palette von pH-Werten anzuzeigen. Kaliumchromat hingegen kann spezifische Reaktionen anzeigen, die für bestimmte chemische Analysen von Bedeutung sind.

Es ist insoweit neben der Vorrichtung als solcher ein Verfahren zur quantitativen chemischen Analyse vorgesehen, wobei durch eine Fördereinheit eine Probe aus einem Probenbehälter, sowie ein Reagenz aus wenigstens einem Reagenzbehälter in einen Messbehälter befördert und dort bis zu einem Umschlagspunkt gemischt werden, so dass eine Emulsion entsteht, welche mit wenigstens einem dem Messbehälter zugeordneten Sensor zur Detektion eines Umschlagspunktes einer chemischen Reaktion analysiert wird, wobei der wenigstens eine Sensor mit einer Auswerteeinheit zur Auswertung der Messsignale datenverbunden ist, erfindungsgemäß ist das Verfahren dadurch gekennzeichnet, dass der Fördereinheit ein Zwischenspeicher zugeordnet ist, an der ein Mehrfachventil angeordnet ist, durch welches abwechselnd eine stoffliche Verbindung zwischen der Fördereinheit mit dem Probenbehälter, dem Messbehälter und dem Reagenzbehälter hergestellt werden kann, wobei das Verfahren die folgenden Schritte umfasst:
- Verbinden der Fördereinheit mit dem Probenbehälter,
- Aufziehen einer Probe aus dem Probenbehälter in die Fördereinheit,
- Verbinden der Fördereinheit mit dem Messbehälter,
- Zugabe der Probe über die Fördereinheit in den Messbehälter,
- Verbinden der Fördereinheit mit dem wenigstens einen Reagenzbehälter
- Aufziehen eines Reagenzes aus dem Reagenzbehälter in die Fördereinheit,
- Verbinden der Fördereinheit mit dem Messbehälter,
- Zugabe des Reagenzes von der Fördereinheit in den Messbehälter, sowie
- Analyse des Umschlagspunktes mithilfe des dem Messbehälter zugeordneten Sensors und der mit dem Sensor datenverbundenen Auswerteeinheit.

Gemäß einer Ausführungsform kann die Probe vom Probenbehälter in eine Messkammer befördert werden, der eine RGB-Kamera oder ein Nahinfrarotsensor zur Trübheitsmessung zugeordnet ist. Durch die Trübheitsmessung kann die Probe vor der Analyse im Messbehälter auf Verunreinigungen überprüft werden. Eine derartige Prüfung der Probe ermöglicht eine höhere Zuverlässigkeit der Messung, da eine trübe Probe das Messergebnis verfälschen könnte.

Die vorstehend beschriebene Erfindung wird im Folgenden anhand eines Ausführungsbeispiels näher erläutert.

Es zeigen
- Figur 1: eine Messvorrichtung zur quantitativen chemischen Analyse in einer schematischen Darstellung,
- Figur 2: eine erste Ausführungsform eines Mehrfachventils, welches die Verbindung zwischen der Spritzenpumpe und verschiedenen Ausgängen ermöglicht in einer schematischen Frontansicht, sowie
- Figur 3: eine zweite Ausführungsform eines Mehrfachventils, welches die Verbindung zwischen der Spritzenpumpe und verschiedenen Ausgängen ermöglicht in einer schematischen Frontansicht.

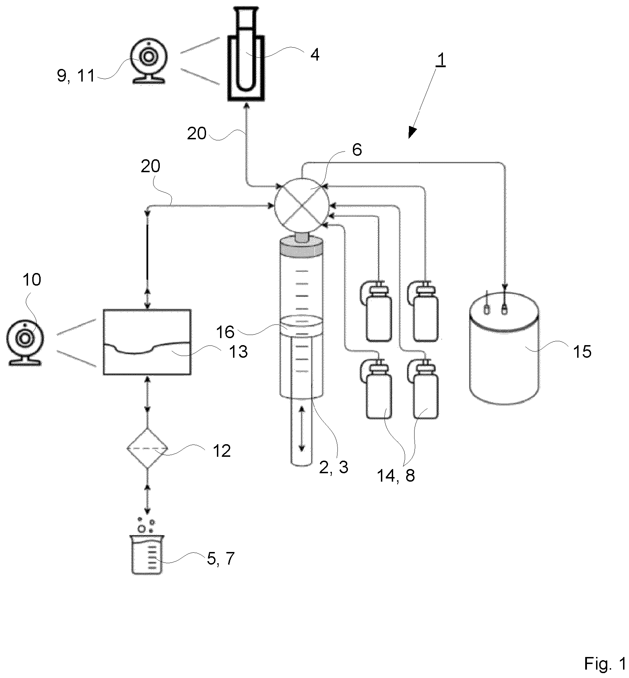

Figur 1 zeigt eine schematische Darstellung einer Messvorrichtung 1 zur quantitativen chemischen Analyse. Diese Vorrichtung umfasst mehrere wesentliche Komponenten, die miteinander verbunden sind, um eine präzise chemische Analyse durchzuführen.

Im Zentrum der Vorrichtung befindet sich eine Spritzenpumpe 3, die als Fördereinheit 2 fungiert. Diese Spritzenpumpe 3 ist über ein Mehrfachventil 6 mit verschiedenen Behältern verbunden. Das Mehrfachventil 6 ermöglicht eine abwechselnde stoffliche Verbindung der Spritzenpumpe 3 mit einem Probenbehälter 5, einem Messbehälter 4, mehreren Reagenzbehältern 14 und einem Abfallbehälter 15.

Der Probenbehälter 5 enthält die zu analysierende Probe 7. Die Probe 7 wird durch die Spritzenpumpe 3 aus dem Probenbehälter 5 entnommen und in den Messbehälter 4 überführt. Der Messbehälter 4 ist eine Messküvette, die zur Durchführung der chemischen Reaktion dient. Ein Sensor 11, der entweder ein Farbsensor oder ein Leitfähigkeitssensor sein kann, ist dem Messbehälter 4 zugeordnet und detektiert den Umschlagspunkt der chemischen Reaktion zwischen der Probe 7 und dem Reagenz 8. Die Messsignale des Sensors 11 werden an eine Auswerteeinheit 9 zur Analyse weitergeleitet. Die Auswerteeinheit 9 ist der Einfachheit halber direkt baueinheitlich mit dem Sensor 11 dargestellt, kann aber auch in einer separaten Einheit vorgehalten werden, etwa als Prozessrechner oder als Steuerung.

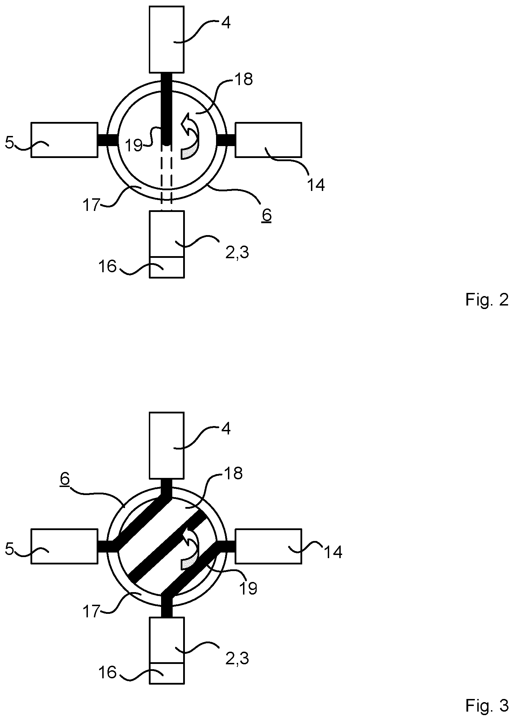

Die Spritzenpumpe 3 ist ebenfalls mit mehreren Reagenzbehältern 14 verbunden, die verschiedene Reagenzien 8 enthalten. Diese Reagenzien 8 können Säuren, Basen oder Silbernitrat umfassen. Das Mehrfachventil 6 ermöglicht die abwechselnde Verbindung der Spritzenpumpe 3 mit den Reagenzbehältern 14, sodass die Reagenzien 8 in den Messbehälter 4 überführt werden können. Die Funktion möglicher Mehrfachventile 6 ist in den Figuren 2 und 3 erläutert.

Eine Kamera 10 ist der Messkammer 13 zugeordnet, die zwischen dem Probenbehälter 5 und der Spritzenpumpe 3 angeordnet ist. Diese Kamera 10 ermöglicht in einem vorgelagerten Schritt die optische Prüfung der Probe 7 während der Entnahme. Ein Filter 12, vorzugsweise ein Sinterfilter, ist ebenfalls zwischen dem Probenbehälter 5 und der Spritzenpumpe 3 angeordnet, um die Probe 7 zu reinigen und eventuelle Ablagerungen oder Partikel zurückzuhalten, welche die Messvorrichtung 1 blockieren oder zusetzen könnten.

Die Spritzenpumpe 3 umfasst einen Kolben 16, der trieblich mit einem Motor, vorzugsweise einem Schrittmotor oder einem Linearmotor, gekoppelt ist. Dies ermöglicht eine präzise Steuerung der Förderbewegungen der Spritzenpumpe 3, so dass über diesen Motor eine Dosierung von Probe 7 und Reagenzien 8 ermöglicht ist.

Das Mehrfachventil 6 besteht aus einem Stator 17 mit verschiedenen Ausgängen und einem Rotor 18 mit wenigstens einer drehbaren Leitung. Je nach Drehstellung des Rotors 18 wird ein Pfad 19 von der Spritzenpumpe 3 zu einem der Ausgänge des Mehrfachventils 6 gebildet, wodurch die Verbindung zu den verschiedenen Behältern hergestellt wird.

Die Vorrichtung ermöglicht auch die Entleerung des Messbehälters 4 nach erfolgter Messung in den Abfallbehälter 15 über die Spritzenpumpe 3. Dies gewährleistet eine effiziente und saubere Handhabung der Proben und Reagenzien.

Zusammenfassend zeigt Figur 1 eine detaillierte Darstellung der Messvorrichtung 1 zur quantitativen chemischen Analyse, wobei die verschiedenen Komponenten und deren Verbindungen sowie die Funktionsweise der Vorrichtung klar dargestellt sind.

Figur 2 und Figur 3 zeigen schematische Darstellungen eines Mehrfachventils 6, das in einer Messvorrichtung zur quantitativen chemischen Analyse verwendet wird. Diese Darstellungen illustrieren die verschiedenen Betriebszustände des Ventils und dessen Verbindung zu den verschiedenen Komponenten der Vorrichtung.

In Figur 2 ist das Mehrfachventil 6 in einer Position dargestellt, in welcher die Spritzenpumpe 3 mit dem Messbehälter 4 verbunden ist. Das Mehrfachventil 6 besteht aus einem Stator 17 und einem Rotor 18. Der Stator 17 weist mehrere Ausgänge auf, die mit verschiedenen Behältern 5, 4 und 14 verbunden sind. Im gezeigten Zustand ist der Rotor 18 so positioniert, dass ein Pfad 19 zwischen der Spritzenpumpe 3 und dem Messbehälter 4 gebildet wird. Dies ermöglicht die Abgabe einer aufgezogenen Probe 7 aus dem Zylinder der Spritzenpumpe 3 in den Messbehälter 4. Der Messbehälter 4 ist über eine Schlauchleitung mit dem Mehrfachventil 6 verbunden, welches wiederum mit der Spritzenpumpe 3 verbunden ist. Die Leitung der Spritzenpumpe 3 verläuft zu einem Großteil in dem Stator 17 und mündet an einer Drehachse des Rotors 18 in diesen hinein. Hierdurch ist die Spritzenpumpe 3 immer an dem Pfad 19 beteiligt, während durch die Drehung des Rotors 18 der drehbare Teil der Leitung mit den Behältern 5, 4 oder 8 alternativ verbunden werden kann.

In Figur 3 ist das Mehrfachventil 6 in einer anderen Ausgestaltung dargestellt. Hier weist der Rotor 18 drei Pfade auf, welche die Behälter 5, 4 und 14 so miteinander verbindet, dass auch die Spritzenpumpe 3 jedesmal getrennt wird. Dies vermeidet eine Kreuzkontamination zwischen den verschiedenen Behältern, da der Pfad 19 des Mehrfachventils ebenfalls für jeden Behälter 5, 4 oder 14 getauscht wird. In der gezeigten Position ist die Spritzenpumpe 3 mit dem Reagenzienbehälter 14 verbunden. Wird der Rotor 18 um eine Achteldrehung nach links gedreht, so dass der Pfad 19 zwischen der Spritzenpumpe 3 und dem Messbehälter 4 über den mittleren Gang gebildet wird, so kann das soeben aufgenommene Reagenz 8 aus der Spritzenpumpe 3 in den Messbehälter 4 dosiert werden. Durch eine weitere Achteldrehung nach links erfolgt eine Verbindung mit dem Probenbehälter 5.

Das Mehrfachventil 6 ermöglicht eine abwechselnde stoffliche Verbindung der Spritzenpumpe 3 mit dem Probenbehälter 5, dem Messbehälter 4 und dem Reagenzbehälter 14. Dies wird durch die Drehbewegung des Rotors 18 erreicht, der je nach seiner Position unterschiedliche Pfade 19 zwischen der Spritzenpumpe 3 und den jeweiligen Behältern bildet.

Zusammenfassend illustrieren Figur 2 und Figur 3 die Funktionsweise des Mehrfachventils 6 und dessen Verbindung zu den verschiedenen Behältern der Messvorrichtung. Die präzise Steuerung der Fördereinheit 2 durch die Spritzenpumpe 3 und das Mehrfachventil 6 ermöglicht eine genaue und effiziente Durchführung der chemischen Analyse.

In einem durchgehenden Ablauf wird also zunächst das Mehrfachventil 6 so eingestellt, dass es mit dem Probenbehälter 5 verbunden wird. Der Kolben 16 der Spritzenpumpe 3 wird betätigt, so dass eine Menge der Probe 7 aufgezogen und in den Zylinder der Spritzenpumpe 3 verbracht wird. Hierbei passiert die Probe 7 zunächst das Filter 12 und dann die Messkammer 13, wo mithilfe der Kamera 10 eine Trübung festgestellt werden könnte. Das Mehrfachventil 6 wird nun so umgestellt, dass die Spritzenpumpe 3 mit der Messküvette 4 verbunden ist.

Nun wird die Probe 7 aus der Spritzenpumpe 3 in die Messküvette 4 verbracht, indem der Motor des Kolbens 16, etwa ein Schrittmotor, in umgekehrter Richtung betätigt wird und die aufgezogene Probe 7 wieder ausfördert, so dass sie in der Messküvette 4 aufgenommen ist. Anschließend wird die Spritzenpumpe 3 mit einem Reagenzienbehälter 14 verbunden, um ein Reagenz 8 von dort aufzuziehen und nach abermaliger Verbindung der Spritzenpumpe 3 mit dem Messbehälter 4 in diesen hinein zu titrieren. Hierbei wird mithilfe eines Sensors 11 von einer Auswerteeinheit 9 überwacht, wann im Zuge der Titration ein Umschlagspunkt erreicht wird. Die Stellungen insbesondere der Spritzenpumpe 3 werden hierbei durchgehend mit erfasst, so dass ein Rückschluss auf die verwendeten Mengen von Probe 7 und Reagenz 8 möglich ist. Die automatisierte quantitative Auswertung der Probe 7 ist so ermöglicht. Schließlich wird der Inhalt des Messbehälters 4 vollständig in die Spritzenpumpe 3 aufgezogen und das Mehrfachventil 6 so verdreht, dass es mit einem Abfallbehälter 15 verbunden ist - diese Position ist in den beispielhaften Darstellungen der Figuren 2 und 3 nicht vorgesehen - und dorthin ausgeworfen.

Vorstehend beschrieben sind somit ein Verfahren und eine Vorrichtung zur quantitativen chemischen Analyse, bei dem der Umschlagspunkt einer chemischen Reaktion berührungslos gemessen werden kann. Zudem können auch Emulsionen direkt ohne vorherige Phasentrennung analysiert werden.

### BEZUGSZEICHENLISTE

- 1: Messvorrichtung
- 2: Fördereinheit
- 3: Spritzenpumpe
- 4: Messbehälter
- 5: Probenbehälter
- 6: Mehrfachventil
- 7: Probe
- 8: Reagenz
- 9: Auswerteeinheit
- 10: RGB-Kamera
- 11: Sensor
- 12: Filter
- 13: Messkammer
- 14: Reagenzbehälter
- 15: Abfallbehälter
- 16: Kolben
- 17: Stator
- 18: Rotor
- 19: Pfad
- 20: Schlauchleitungen

## Patentansprüche

1. Messvorrichtung zur quantitativen chemischen Analyse, umfassend eine Fördereinheit (2), welche mit wenigstens einem Probenbehälter (5) zur Aufnahme einer Probe (7), wenigstens einem Reagenzbehälter (14) mit einem Reagenz (8), und einem Messbehälter (4) stofflich verbunden ist, wobei dem Messbehälter (4) wenigstens ein Sensor (11) zur Detektion eines Umschlagspunktes einer chemischen Reaktion zwischen der Probe (7) und dem Reagenz (8) zugeordnet ist, welcher mit einer Auswerteeinheit zur Auswertung der Messsignale des wenigstens einen Sensors (11) datenverbunden ist,
**dadurch gekennzeichnet, dass** der Fördereinheit (2) ein Zwischenspeicher zugeordnet ist, und sie über ein Mehrfachventil (6) mit dem Probenbehälter (5), dem Messbehälter (4) und dem wenigstens einen Reagenzbehälter (14) abwechselnd verbindbar ist.

2. Messvorrichtung gemäß Anspruch 1, **dadurch gekennzeichnet, dass** die Fördereinheit (2) zusätzlich mit wenigstens einem Abfallbehälter (15) über das Mehrfachventil (6) verbindbar ist.

3. Messvorrichtung gemäß einem der vorhergehenden Ansprüche, **dadurch gekennzeichnet, dass** der wenigstens eine Sensor (11) ein Farbsensor, vorzugsweise ein RGB Sensor ist.

4. Messvorrichtung gemäß Anspruch 2, **dadurch gekennzeichnet, dass** der wenigstens eine Sensor (11) ein Leitfähigkeitssensor ist.

5. Messvorrichtung gemäß einem der vorhergehenden Ansprüche, **dadurch gekennzeichnet, dass** der Messbehälter (4) eine Messküvette ist.

6. Messvorrichtung gemäß einem der vorhergehenden Ansprüche, **dadurch gekennzeichnet, dass** es sich bei der Fördereinheit (2) um eine Zahnradpumpe, eine Membranpumpe oder eine Schlauchpumpe handelt.

7. Messvorrichtung gemäß einem der Ansprüche 1 bis 5, **dadurch gekennzeichnet, dass** es sich bei der Fördereinheit (2) um eine Spritzenpumpe (3) handelt.

8. Messvorrichtung gemäß Anspruch 7, **dadurch gekennzeichnet, dass** die Spritzenpumpe (3) einen Kolben (16) aufweist, der als Zwischenspeicher dient und trieblich mit einem Motor, vorzugsweise einem Schrittmotor oder einem Linearmotor gekoppelt ist.

9. Messvorrichtung gemäß Anspruch 7, **dadurch gekennzeichnet, dass** die Spritzenpumpe (3) über einen Schlauch mit dem Mehrfachventil (6) verbunden ist und einen Kolben (16) aufweist, dessen Volumen geringer ist als das Volumen des Schlauchs, wobei der Schlauch als Zwischenspeicher dient und der Kolben (16) trieblich mit einem Motor, vorzugsweise einem Schrittmotor oder einem Linearmotor gekoppelt ist.

10. Messvorrichtung gemäß einem der vorhergehenden Ansprüche, **dadurch gekennzeichnet, dass** der Messbehälter (4) und/oder der Probenbehälter (5) und/oder der wenigstens eine Reagenzbehälter (14) über Schlauchleitungen (2) mit dem Mehrfachventil (6) der Fördereinheit (2) verbunden sind.

11. Messvorrichtung gemäß einem der vorhergehenden Ansprüche, **dadurch gekennzeichnet, dass** das Mehrfachventil (6) einen Stator (17) mit verschiedenen Ausgängen und einen Rotor (18) mit wenigstens einer drehbaren Leitung umfasst, wobei je nach Drehstellung des Rotors (18) ein Pfad (19) von der Fördereinheit (2) zu einem Ausgang des Mehrfachventils (6) gebildet wird.

12. Messvorrichtung gemäß einem der vorhergehenden Ansprüche, **dadurch gekennzeichnet, dass** der Probenbehälter (5) mit der Fördereinheit (2) über eine Messkammer (13) stofflich verbunden ist, wobei der Messkammer (13) ein Bildgeber, insbesondere eine RGB-Kamera (10) und /oder ein Nahinfrarotsensor zur optischen Prüfung der Probe (7) zugeordnet ist.

13. Messvorrichtung gemäß einem der vorhergehenden Ansprüche, **dadurch gekennzeichnet, dass** der Probenbehälter (5) über einen Filter (12) stofflich mit der der Fördereinheit (2) verbunden ist.

14. Messvorrichtung gemäß einem der vorhergehenden Ansprüche, **dadurch gekennzeichnet, dass** das Reagenz (8) entweder eine Säure oder eine Base oder Silbernitrat oder Quecksilber umfasst.

15. Messvorrichtung gemäß einem der vorhergehenden Ansprüche, **dadurch gekennzeichnet, dass** das Reagenz (8) und/oder die Probe (7) einen Indikator, vorzugsweise einen Universalindikator oder Kaliumchromat umfasst.

16. Verfahren zur quantitativen chemischen Analyse, wobei durch eine Fördereinheit (2) eine Probe (7) aus einem Probenbehälter (5), sowie ein Reagenz (8) aus wenigstens einem Reagenzbehälter (14) in einen Messbehälter (4) befördert und dort bis zu einem Umschlagspunkt gemischt werden, so dass eine Emulsion entsteht, welche mit wenigstens einem dem Messbehälter (4) zugeordneten Sensor (11) zur Detektion eines Umschlagspunktes einer chemischen Reaktion analysiert wird, wobei der wenigstens eine Sensor (11) mit einer Auswerteeinheit (9) zur Auswertung der Messsignale datenverbunden ist,
**dadurch gekennzeichnet, dass** der Fördereinheit (2) ein Zwischenspeicher zugeordnet ist, an der ein Mehrfachventil (6) angeordnet ist, durch welches abwechselnd eine stoffliche Verbindung zwischen der Fördereinheit (2) mit dem Probenbehälter (5), dem Messbehälter (4) und dem Reagenzbehälter (14) hergestellt werden kann, wobei das Verfahren die folgenden Schritte umfasst:
- Verbinden der Fördereinheit (2) mit dem Probenbehälter (5),
- Aufziehen einer Probe (7) aus dem Probenbehälter (5) in die Fördereinheit (2),
- Verbinden der Fördereinheit (2) mit dem Messbehälter (4),
- Zugabe der Probe (7) über die Fördereinheit (2) in den Messbehälter (4),
- Verbinden der Fördereinheit (2) mit dem wenigstens einen Reagenzbehälter (14)
- Aufziehen eines Reagenzes (8) aus dem Reagenzbehälter (14) in die Fördereinheit (2),
- Verbinden der Fördereinheit (2) mit dem Messbehälter (4),
- Zugabe des Reagenzes (8) von der Fördereinheit (2) in den Messbehälter (4), sowie
- Analyse des Umschlagspunktes mithilfe des dem Messbehälter (4) zugeordneten Sensors (11) und der mit dem Sensor (11) datenverbundenen Auswerteeinheit (9).

17. Verfahren gemäß Anspruch 16, **dadurch gekennzeichnet, dass** im Zuge der Entnahme der Probe (7) aus dem Probenbehälter (5) eine Trübheitsmessung mithilfe eines Bildgebers, insbesondere einer RGB-Kamera (10) und /oder eines Nahinfrarotsensors durchgeführt wird.

18. Verfahren gemäß Anspruch 16 oder 17, **dadurch gekennzeichnet, dass** die Probe (7) im Zuge der Entnahme aus dem Probenbehälter (5) über einen Filter (12), vorzugsweise einen Sinterfilter, gereinigt wird.

19. Verfahren gemäß einem der Ansprüche 16 bis 18, **dadurch gekennzeichnet, dass** dem Messbehälter (4) nacheinander mehrere Reagenzien (8) aus unterschiedlichen Reagenzbehältern (14) über die Fördereinheit (2) zugeführt werden.

20. Verfahren gemäß einem der Ansprüche 16 bis 19, **dadurch gekennzeichnet, dass** der Messbehälter (4) nach erfolgter Messung über die Fördereinheit (2) in einen Abfallbehälter (15) entleert wird.

21. Verfahren gemäß einem der Ansprüche 16 bis 20, **dadurch gekennzeichnet, dass** es sich bei der Fördereinheit (2) um eine Zahnradpumpe, eine Membranpumpe oder eine Schlauchpumpe handelt.

22. Messvorrichtung gemäß einem der Ansprüche 16 bis 21, **dadurch gekennzeichnet, dass** es sich bei der Fördereinheit (2) um eine Spritzenpumpe (3) handelt.

## Geänderte Patentansprüche

### Geänderte Patentansprüche gemäss Regel 137(2) EPÜ.

**1.** Messvorrichtung zur quantitativen chemischen Analyse, umfassend eine Fördereinheit (2), welche mit wenigstens einem Probenbehälter (5) zur Aufnahme einer Probe (7), wenigstens einem Reagenzbehälter (14) mit einem Reagenz (8), und einem Messbehälter (4) stofflich verbunden ist, wobei dem Messbehälter (4) wenigstens ein Sensor (11) zur Detektion eines Umschlagspunktes einer chemischen Reaktion zwischen der Probe (7) und dem Reagenz (8) zugeordnet ist, welcher mit einer Auswerteeinheit zur Auswertung der Messsignale des wenigstens einen Sensors (11) datenverbunden ist, wobei der Fördereinheit (2) ein Zwischenspeicher zugeordnet ist, und sie über ein Mehrfachventil (6) mit dem Probenbehälter (5), dem Messbehälter (4) und dem wenigstens einen Reagenzbehälter (14) abwechselnd verbindbar ist,
**dadurch gekennzeichnet, dass** der wenigstens eine Sensor (11) ein Farbsensor, vorzugsweise ein RGB Sensor ist, wobei der Probenbehälter (5) mit der Fördereinheit (2) über eine Messkammer (13) stofflich verbunden ist, wobei der Messkammer (13) ein Bildgeber, insbesondere eine RGB-Kamera (10) und /oder ein Nahinfrarotsensor zur optischen Prüfung der Probe (7) zugeordnet ist.

**2.** Messvorrichtung gemäß Anspruch 1, **dadurch gekennzeichnet, dass** die Fördereinheit (2) zusätzlich mit wenigstens einem Abfallbehälter (15) über das Mehrfachventil (6) verbindbar ist.

**3.** Messvorrichtung gemäß einem der vorhergehenden Ansprüche,
**dadurch gekennzeichnet, dass** der Messbehälter (4) eine Messküvette ist.

**4.** Messvorrichtung gemäß einem der vorhergehenden Ansprüche,
**dadurch gekennzeichnet, dass** es sich bei der Fördereinheit (2) um eine Zahnradpumpe, eine Membranpumpe oder eine Schlauchpumpe handelt.

**5.** Messvorrichtung gemäß einem der Ansprüche 1 bis 3, **dadurch gekennzeichnet, dass** es sich bei der Fördereinheit (2) um eine Spritzenpumpe (3) handelt.

**6.** Messvorrichtung gemäß Anspruch 5, **dadurch gekennzeichnet, dass** die Spritzenpumpe (3) einen Kolben (16) aufweist, der als Zwischenspeicher dient und trieblich mit einem Motor, vorzugsweise einem Schrittmotor oder einem Linearmotor gekoppelt ist.

**7.** Messvorrichtung gemäß Anspruch 5, **dadurch gekennzeichnet, dass** die Spritzenpumpe (3) über einen Schlauch mit dem Mehrfachventil (6) verbunden ist und einen Kolben (16) aufweist, dessen Volumen geringer ist als das Volumen des Schlauchs, wobei der Schlauch als Zwischenspeicher dient und der Kolben (16) trieblich mit einem Motor, vorzugsweise einem Schrittmotor oder einem Linearmotor gekoppelt ist.

**8.** Messvorrichtung gemäß einem der vorhergehenden Ansprüche,
**dadurch gekennzeichnet, dass** der Messbehälter (4) und/oder der Probenbehälter (5) und/oder der wenigstens eine Reagenzbehälter (14) über Schlauchleitungen (2) mit dem Mehrfachventil (6) der Fördereinheit (2) verbunden sind.

**9.** Messvorrichtung gemäß einem der vorhergehenden Ansprüche,
**dadurch gekennzeichnet, dass** das Mehrfachventil (6) einen Stator (17) mit verschiedenen Ausgängen und einen Rotor (18) mit wenigstens einer drehbaren Leitung umfasst, wobei je nach Drehstellung des Rotors (18) ein Pfad (19) von der Fördereinheit (2) zu einem Ausgang des Mehrfachventils (6) gebildet wird.

**10.** Messvorrichtung gemäß einem der vorhergehenden Ansprüche,
**dadurch gekennzeichnet, dass** der Probenbehälter (5) über einen Filter (12) stofflich mit der der Fördereinheit (2) verbunden ist.

**11.** Messvorrichtung gemäß einem der vorhergehenden Ansprüche,
**dadurch gekennzeichnet, dass** das Reagenz (8) entweder eine Säure oder eine Base oder Silbernitrat oder Quecksilber umfasst.

**12.** Messvorrichtung gemäß einem der vorhergehenden Ansprüche,
**dadurch gekennzeichnet, dass** das Reagenz (8) und/oder die Probe (7) einen Indikator, vorzugsweise einen Universalindikator oder Kaliumchromat umfasst.

**13.** Verfahren zur quantitativen chemischen Analyse, wobei durch eine Fördereinheit (2) eine Probe (7) aus einem Probenbehälter (5), sowie ein Reagenz (8) aus wenigstens einem Reagenzbehälter (14) in einen Messbehälter (4) befördert und dort bis zu einem Umschlagspunkt gemischt werden, so dass eine Emulsion entsteht, welche mit wenigstens einem dem Messbehälter (4) zugeordneten Sensor (11) zur Detektion eines Umschlagspunktes einer chemischen Reaktion analysiert wird, wobei der wenigstens eine Sensor (11) mit einer Auswerteeinheit (9) zur Auswertung der Messsignale datenverbunden ist, wobei der Fördereinheit (2) ein Zwischenspeicher zugeordnet ist, an der ein Mehrfachventil (6) angeordnet ist, durch welches abwechselnd eine stoffliche Verbindung zwischen der Fördereinheit (2) mit dem Probenbehälter (5), dem Messbehälter (4) und dem Reagenzbehälter (14) hergestellt werden kann,
**dadurch gekennzeichnet, dass** der wenigstens eine Sensor (11) die Farbe der Emulsion durch einen Farbsensor, vorzugsweise durch einen RGB Sensor misst, wobei der Probenbehälter (5) mit der Fördereinheit (2) über eine Messkammer (13) stofflich verbunden ist und der Messkammer (13) ein Bildgeber zugeordnet ist, insbesondere eine RGB-Kamera (10) und /oder ein Nahinfrarotsensor, welcher eine optische Prüfung der Probe (7) durchführt, wobei das Verfahren die folgenden Schritte umfasst:
- Verbinden der Fördereinheit (2) mit dem Probenbehälter (5),
- Aufziehen einer Probe (7) aus dem Probenbehälter (5) in die Fördereinheit (2),
- Verbinden der Fördereinheit (2) mit dem Messbehälter (4),
- Zugabe der Probe (7) über die Fördereinheit (2) in den Messbehälter (4),
- Verbinden der Fördereinheit (2) mit dem wenigstens einen Reagenzbehälter (14)
- Aufziehen eines Reagenzes (8) aus dem Reagenzbehälter (14) in die Fördereinheit (2),
- Verbinden der Fördereinheit (2) mit dem Messbehälter (4),
- Zugabe des Reagenzes (8) von der Fördereinheit (2) in den Messbehälter (4), sowie
- Analyse des Umschlagspunktes mithilfe des dem Messbehälter (4) zugeordneten Sensors (11) und der mit dem Sensor (11) datenverbundenen Auswerteeinheit (9).

**14.** Verfahren gemäß Anspruch 13, **dadurch gekennzeichnet, dass** im Zuge der Entnahme der Probe (7) aus dem Probenbehälter (5) eine Trübheitsmessung mithilfe eines Bildgebers, insbesondere einer RGB-Kamera (10) und /oder eines Nahinfrarotsensors durchgeführt wird.

**15.** Verfahren gemäß Anspruch 13 oder 14, **dadurch gekennzeichnet, dass** die Probe (7) im Zuge der Entnahme aus dem Probenbehälter (5) über einen Filter (12), vorzugsweise einen Sinterfilter, gereinigt wird.

**16.** Verfahren gemäß einem der Ansprüche 13 bis 15, **dadurch gekennzeichnet, dass** dem Messbehälter (4) nacheinander mehrere Reagenzien (8) aus unterschiedlichen Reagenzbehältern (14) über die Fördereinheit (2) zugeführt werden.

**17.** Verfahren gemäß einem der Ansprüche 13 bis 16, **dadurch gekennzeichnet, dass** der Messbehälter (4) nach erfolgter Messung über die Fördereinheit (2) in einen Abfallbehälter (15) entleert wird.

**18.** Verfahren gemäß einem der Ansprüche 13 bis 17, **dadurch gekennzeichnet, dass** es sich bei der Fördereinheit (2) um eine Zahnradpumpe, eine Membranpumpe oder eine Schlauchpumpe handelt.

**19.** Messvorrichtung gemäß einem der Ansprüche 13 bis 18, **dadurch gekennzeichnet, dass** es sich bei der Fördereinheit (2) um eine Spritzenpumpe (3) handelt.

**1.** Messvorrichtung zur quantitativen chemischen Analyse, umfassend eine Fördereinheit (2), welche mit wenigstens einem Probenbehälter (5) zur Aufnahme einer Probe (7), wenigstens einem Reagenzbehälter (14) mit einem Reagenz (8), und einem Messbehälter (4) stofflich verbunden ist, wobei dem Messbehälter (4) wenigstens ein Sensor (11) zur Detektion eines Umschlagspunktes einer chemischen Reaktion zwischen der Probe (7) und dem Reagenz (8) zugeordnet ist, welcher mit einer Auswerteeinheit zur Auswertung der Messsignale des wenigstens einen Sensors (11) datenverbunden ist, wobei der Fördereinheit (2) ein Zwischenspeicher zugeordnet ist, und sie über ein Mehrfachventil (6) mit dem Probenbehälter (5), dem Messbehälter (4) und dem wenigstens einen Reagenzbehälter (14) abwechselnd verbindbar ist,
**dadurch gekennzeichnet, dass** der wenigstens eine Sensor (11) ein Farbsensor, vorzugsweise ein RGB Sensor ist, wobei der Probenbehälter (5) mit der Fördereinheit (2) über eine Messkammer (13) stofflich verbunden ist und der Messkammer (13) ein Bildgeber, insbesondere eine RGB-Kamera (10) und/oder ein Nahinfrarotsensor zur optischen Prüfung der Probe (7) zugeordnet ist und wobei der der Messbehälter eine Messküvette ist.

**2.** Messvorrichtung gemäß Anspruch 1, **dadurch gekennzeichnet, dass** die Fördereinheit (2) zusätzlich mit wenigstens einem Abfallbehälter (15) über das Mehrfachventil (6) verbindbar ist.

**3.** Messvorrichtung gemäß einem der vorhergehenden Ansprüche,
**dadurch gekennzeichnet, dass** es sich bei der Fördereinheit (2) um eine Zahnradpumpe, eine Membranpumpe oder eine Schlauchpumpe handelt.

**4.** Messvorrichtung gemäß einem der Ansprüche 1 oder 2, **dadurch gekennzeichnet, dass** es sich bei der Fördereinheit (2) um eine Spritzenpumpe (3) handelt.

**5.** Messvorrichtung gemäß Anspruch 4, **dadurch gekennzeichnet, dass** die Spritzenpumpe (3) einen Kolben (16) aufweist, der als Zwischenspeicher dient und trieblich mit einem Motor, vorzugsweise einem Schrittmotor oder einem Linearmotor gekoppelt ist.

**6.** Messvorrichtung gemäß Anspruch 4, **dadurch gekennzeichnet, dass** die Spritzenpumpe (3) über einen Schlauch mit dem Mehrfachventil (6) verbunden ist und einen Kolben (16) aufweist, dessen Volumen geringer ist als das Volumen des Schlauchs, wobei der Schlauch als Zwischenspeicher dient und der Kolben (16) trieblich mit einem Motor, vorzugsweise einem Schrittmotor oder einem Linearmotor gekoppelt ist.

**7.** Messvorrichtung gemäß einem der vorhergehenden Ansprüche,
**dadurch gekennzeichnet, dass** der Messbehälter (4) und/oder der Probenbehälter (5) und/oder der wenigstens eine Reagenzbehälter (14) über Schlauchleitungen (2) mit dem Mehrfachventil (6) der Fördereinheit (2) verbunden sind.

**8.** Messvorrichtung gemäß einem der vorhergehenden Ansprüche,
**dadurch gekennzeichnet, dass** das Mehrfachventil (6) einen Stator (17) mit verschiedenen Ausgängen und einen Rotor (18) mit wenigstens einer drehbaren Leitung umfasst, wobei je nach Drehstellung des Rotors (18) ein Pfad (19) von der Fördereinheit (2) zu einem Ausgang des Mehrfachventils (6) gebildet wird.

**9.** Messvorrichtung gemäß einem der vorhergehenden Ansprüche, **dadurch gekennzeichnet, dass** der Probenbehälter (5) über einen Filter (12) stofflich mit der der Fördereinheit (2) verbunden ist.

**10.** Messvorrichtung gemäß einem der vorhergehenden Ansprüche, **dadurch gekennzeichnet, dass** das Reagenz (8) entweder eine Säure oder eine Base oder Silbernitrat oder Quecksilber umfasst.

**11.** Messvorrichtung gemäß einem der vorhergehenden Ansprüche, **dadurch gekennzeichnet, dass** das Reagenz (8) und/oder die Probe (7) einen Indikator, vorzugsweise einen Universalindikator oder Kaliumchromat umfasst.

**12.** Verfahren zur quantitativen chemischen Analyse, wobei durch eine Fördereinheit (2) eine Probe (7) aus einem Probenbehälter (5), sowie ein Reagenz (8) aus wenigstens einem Reagenzbehälter (14) in einen Messbehälter (4) befördert und dort bis zu einem Umschlagspunkt gemischt werden, so dass eine Emulsion entsteht, welche mit wenigstens einem dem Messbehälter (4) zugeordneten Sensor (11) zur Detektion eines Umschlagspunktes einer chemischen Reaktion analysiert wird, wobei der wenigstens eine Sensor (11) mit einer Auswerteeinheit (9) zur Auswertung der Messsignale datenverbunden ist, wobei der Fördereinheit (2) ein Zwischenspeicher zugeordnet ist, an der ein Mehrfachventil (6) angeordnet ist, durch welches abwechselnd eine stoffliche Verbindung zwischen der Fördereinheit (2) mit dem Probenbehälter (5), dem Messbehälter (4) und dem Reagenzbehälter (14) hergestellt werden kann,
**dadurch gekennzeichnet, dass** der wenigstens eine Sensor (11) die Farbe der Emulsion durch einen Farbsensor, vorzugsweise einen RGB Sensor, misst, wobei der Probenbehälter (5) mit der Fördereinheit (2) über eine Messkammer (13) stofflich verbunden ist und der Messkammer (13) ein Bildgeber zugeordnet ist, insbesondere eine RGB-Kamera (10) und/oder ein Nahinfrarotsensor, welcher eine optischen Prüfung der Probe (7) durchführt, und wobei der Messbehälter eine Messküvette ist, wobei das Verfahren die folgenden Schritte umfasst:
- Verbinden der Fördereinheit (2) mit dem Probenbehälter (5),
- Aufziehen einer Probe (7) aus dem Probenbehälter (5) in die Fördereinheit (2),
- Verbinden der Fördereinheit (2) mit dem Messbehälter (4),
- Zugabe der Probe (7) über die Fördereinheit (2) in den Messbehälter (4),
- Verbinden der Fördereinheit (2) mit dem wenigstens einen Reagenzbehälter (14)
- Aufziehen eines Reagenzes (8) aus dem Reagenzbehälter (14) in die Fördereinheit (2),
- Verbinden der Fördereinheit (2) mit dem Messbehälter (4),
- Zugabe des Reagenzes (8) von der Fördereinheit (2) in den Messbehälter (4), sowie
- Analyse des Umschlagspunktes mithilfe des dem Messbehälter (4) zugeordneten Sensors (11) und der mit dem Sensor (11) datenverbundenen Auswerteeinheit (9).

**13.** Verfahren gemäß Anspruch 12, **dadurch gekennzeichnet, dass** im Zuge der Entnahme der Probe (7) aus dem Probenbehälter (5) eine Trübheitsmessung mithilfe eines Bildgebers, insbesondere einer RGB-Kamera (10) und /oder eines Nahinfrarotsensors durchgeführt wird.

**14.** Verfahren gemäß Anspruch 12 oder 13, **dadurch gekennzeichnet, dass** die Probe (7) im Zuge der Entnahme aus dem Probenbehälter (5) über einen Filter (12), vorzugsweise einen Sinterfilter, gereinigt wird.

**15.** Verfahren gemäß einem der Ansprüche 12 bis 14, **dadurch gekennzeichnet, dass** dem Messbehälter (4) nacheinander mehrere Reagenzien (8) aus unterschiedlichen Reagenzbehältern (14) über die Fördereinheit (2) zugeführt werden.

**16.** Verfahren gemäß einem der Ansprüche 12 bis 15, **dadurch gekennzeichnet, dass** der Messbehälter (4) nach erfolgter Messung über die Fördereinheit (2) in einen Abfallbehälter (15) entleert wird.

**17.** Verfahren gemäß einem der Ansprüche 12 bis 16, **dadurch gekennzeichnet, dass** es sich bei der Fördereinheit (2) um eine Zahnradpumpe, eine Membranpumpe oder eine Schlauchpumpe handelt.

**18.** Messvorrichtung gemäß einem der Ansprüche 12 bis 17, **dadurch gekennzeichnet, dass** es sich bei der Fördereinheit (2) um eine Spritzenpumpe (3) handelt.

**1.** Messvorrichtung zur quantitativen chemischen Analyse, umfassend eine Fördereinheit (2), welche mit wenigstens einem Probenbehälter (5) zur Aufnahme einer Probe (7), wenigstens einem Reagenzbehälter (14) mit einem Reagenz (8), und einem Messbehälter (4) stofflich verbunden ist, wobei dem Messbehälter (4) wenigstens ein Sensor (11) zur Detektion eines Umschlagspunktes einer chemischen Reaktion zwischen der Probe (7) und dem Reagenz (8) zugeordnet ist, welcher mit einer Auswerteeinheit zur Auswertung der Messsignale des wenigstens einen Sensors (11) datenverbunden ist, wobei der Fördereinheit (2) ein Zwischenspeicher zugeordnet ist, und sie über ein Mehrfachventil (6) mit dem Probenbehälter (5), dem Messbehälter (4) und dem wenigstens einen Reagenzbehälter (14) abwechselnd verbindbar ist,
**dadurch gekennzeichnet, dass** der wenigstens eine Sensor (11) ein Farbsensor, vorzugsweise ein RGB Sensor ist, wobei der Probenbehälter (5) mit der Fördereinheit (2) über eine Messkammer (13) stofflich verbunden ist und der Messkammer (13) ein Bildgeber, insbesondere eine RGB-Kamera (10) und /oder ein Nahinfrarotsensor zur optischen Prüfung der Probe (7) zugeordnet ist, wobei der Messbehälter eine Messküvette ist, und wobei der Probenbehälter (5) über einen Filter (12) stofflich mit der der Fördereinheit (2) verbunden ist.

**2.** Messvorrichtung gemäß Anspruch 1, **dadurch gekennzeichnet, dass** die Fördereinheit (2) zusätzlich mit wenigstens einem Abfallbehälter (15) über das Mehrfachventil (6) verbindbar ist.

**3.** Messvorrichtung gemäß einem der vorhergehenden Ansprüche,
**dadurch gekennzeichnet, dass** es sich bei der Fördereinheit (2) um eine Zahnradpumpe, eine Membranpumpe oder eine Schlauchpumpe handelt.

**4.** Messvorrichtung gemäß Anspruch 1, **dadurch gekennzeichnet, dass** es sich bei der Fördereinheit (2) um eine Spritzenpumpe (3) handelt.

**5.** Messvorrichtung gemäß Anspruch 4, **dadurch gekennzeichnet, dass** die Spritzenpumpe (3) einen Kolben (16) aufweist, der als Zwischenspeicher dient und trieblich mit einem Motor, vorzugsweise einem Schrittmotor oder einem Linearmotor gekoppelt ist.

**6.** Messvorrichtung gemäß Anspruch 4, **dadurch gekennzeichnet, dass** die Spritzenpumpe (3) über einen Schlauch mit dem Mehrfachventil (6) verbunden ist und einen Kolben (16) aufweist, dessen Volumen geringer ist als das Volumen des Schlauchs, wobei der Schlauch als Zwischenspeicher dient und der Kolben (16) trieblich mit einem Motor, vorzugsweise einem Schrittmotor oder einem Linearmotor gekoppelt ist.

**7.** Messvorrichtung gemäß einem der vorhergehenden Ansprüche,
**dadurch gekennzeichnet, dass** der Messbehälter (4) und/oder der Probenbehälter (5) und/oder der wenigstens eine Reagenzbehälter (14) über Schlauchleitungen (2) mit dem Mehrfachventil (6) der Fördereinheit (2) verbunden sind.

**8.** Messvorrichtung gemäß einem der vorhergehenden Ansprüche,
**dadurch gekennzeichnet, dass** das Mehrfachventil (6) einen Stator (17) mit verschiedenen Ausgängen und einen Rotor (18) mit wenigstens einer drehbaren Leitung umfasst, wobei je nach Drehstellung des Rotors (18) ein Pfad (19) von der Fördereinheit (2) zu einem Ausgang des Mehrfachventils (6) gebildet wird.

**9.** Messvorrichtung gemäß einem der vorhergehenden Ansprüche, **dadurch gekennzeichnet, dass** das Reagenz (8) entweder eine Säure oder eine Base oder Silbernitrat oder Quecksilber umfasst.

**10.** Messvorrichtung gemäß einem der vorhergehenden Ansprüche, **dadurch gekennzeichnet, dass** das Reagenz (8) und/oder die Probe (7) einen Indikator, vorzugsweise einen Universalindikator oder Kaliumchromat umfasst.

**11.** Verfahren zur quantitativen chemischen Analyse, wobei durch eine Fördereinheit (2) eine Probe (7) aus einem Probenbehälter (5), sowie ein Reagenz (8) aus wenigstens einem Reagenzbehälter (14) in einen Messbehälter (4) befördert und dort bis zu einem Umschlagspunkt gemischt werden, so dass eine Emulsion entsteht, welche mit wenigstens einem dem Messbehälter (4) zugeordneten Sensor (11) zur Detektion eines Umschlagspunktes einer chemischen Reaktion analysiert wird, wobei der wenigstens eine Sensor (11) mit einer Auswerteeinheit (9) zur Auswertung der Messsignale datenverbunden ist, wobei der Fördereinheit (2) ein Zwischenspeicher zugeordnet ist, an der ein Mehrfachventil (6) angeordnet ist, durch welches abwechselnd eine stoffliche Verbindung zwischen der Fördereinheit (2) mit dem Probenbehälter (5), dem Messbehälter (4) und dem Reagenzbehälter (14) hergestellt werden kann,
**dadurch gekennzeichnet, dass** der wenigstens eine Sensor (11) die Farbe der Emulsion durch einen Farbsensor, vorzugsweise ein RGB-Sensor misst, wobei der Probenbehälter (5) mit der Fördereinheit (2) über eine Messkammer (13) stofflich verbunden ist und der Messkammer (13) ein Bildgeber zugeordnet ist, insbesondere eine RGB-Kamera (10) und/oder ein Nahinfrarotsensor, welcher eine optischen Prüfung der Probe (7) durchführt, wobei der Messbehälter eine Messküvette ist, und wobei der Probenbehälter (5) über einen Filter (12) stofflich mit der der Fördereinheit (2) verbunden ist, wobei das Verfahren die folgenden Schritte umfasst:
- Verbinden der Fördereinheit (2) mit dem Probenbehälter (5),
- Aufziehen einer Probe (7) aus dem Probenbehälter (5) in die Fördereinheit (2),
- Verbinden der Fördereinheit (2) mit dem Messbehälter (4),
- Zugabe der Probe (7) über die Fördereinheit (2) in den Messbehälter (4),
- Verbinden der Fördereinheit (2) mit dem wenigstens einen Reagenzbehälter (14)
- Aufziehen eines Reagenzes (8) aus dem Reagenzbehälter (14) in die Fördereinheit (2),
- Verbinden der Fördereinheit (2) mit dem Messbehälter (4),
- Zugabe des Reagenzes (8) von der Fördereinheit (2) in den Messbehälter (4), sowie
- Analyse des Umschlagspunktes mithilfe des dem Messbehälter (4) zugeordneten Sensors (11) und der mit dem Sensor (11) datenverbundenen Auswerteeinheit (9).

**12.** Verfahren gemäß Anspruch 11, **dadurch gekennzeichnet, dass** im Zuge der Entnahme der Probe (7) aus dem Probenbehälter (5) eine Trübheitsmessung mithilfe eines Bildgebers, insbesondere einer RGB-Kamera (10) und /oder eines Nahinfrarotsensors durchgeführt wird.

**13.** Verfahren gemäß Anspruch 11 oder 12, **dadurch gekennzeichnet, dass** die Probe (7) im Zuge der Entnahme aus dem Probenbehälter (5) über einen Filter (12), vorzugsweise einen Sinterfilter, gereinigt wird.

**14.** Verfahren gemäß einem der Ansprüche 11 bis 13, **dadurch gekennzeichnet, dass** dem Messbehälter (4) nacheinander mehrere Reagenzien (8) aus unterschiedlichen Reagenzbehältern (14) über die Fördereinheit (2) zugeführt werden.

**15.** Verfahren gemäß einem der Ansprüche 11 bis 14, **dadurch gekennzeichnet, dass** der Messbehälter (4) nach erfolgter Messung über die Fördereinheit (2) in einen Abfallbehälter (15) entleert wird.

**16.** Verfahren gemäß einem der Ansprüche 11 bis 15, **dadurch gekennzeichnet, dass** es sich bei der Fördereinheit (2) um eine Zahnradpumpe, eine Membranpumpe oder eine Schlauchpumpe handelt.

**17.** Messvorrichtung gemäß einem der Ansprüche 11 bis 16, **dadurch gekennzeichnet, dass** es sich bei der Fördereinheit (2) um eine Spritzenpumpe (3) handelt.
